# EUROPEAN PATENT SPECIFICATION

(11) **EP 1 578 165 B1**
(45) Date of publication and mention of the grant of the patent: **30.07.2008**
(21) Application number: 05380028.0
(22) Date of filing: 17.02.2005
(51) Int. Cl.: H04Q 7/38, H04Q 7/32

(54) **Service provisioning due to change of mobile terminal**
Dienstbereitstellung wegen Austausch eines Mobilendgerätes
Fourniture de services sans fil depuis l'échange d'un terminal mobile

(30) Priority: 17.03.2004 ES 200400671
(43) Date of publication of application: 21.09.2005
(73) Proprietor: Vodafone Group PLC, Newbury Berkshire RG14 2FN (GB); Vodafone Espana, S.A., 28108 Alcobendas, Madrid (ES)
(72) Inventor: Borrero Ortiz, Santiago, 28028 Madrid (ES); Del Ser Bartolome, David, 28005 Madrid (ES); Martin Lopez, David, 28027 Madrid (ES); Solano Nogales, Luis, 28022 Madrid (ES)
(74) Representative: Carvajal y Urquijo, Isabel

(56) References cited:
- WO-A-00/04740
- WO-A-00/67494
- WO-A-97/07642

## Description

### FIELD OF THE INVENTION

The invention is encompassed within the field of mobile telephony, in which acronyms and English terms are usually used to refer to elements and concepts typical of the field. The English acronyms and terms used herein will be explained throughout the text.

### BACKGROUND OF THE INVENTION

Currently, the mobile telephones used in cellular mobile telephony usually include a smart card comprising essential elements for operating the telephone. It can be referred to as a "subscriber equipment" comprising, both in the GSM (Global System for Mobile Communication) system and in the GPRS (General Packet Radio Service) and UMTS (Universal Mobile Telecommunications System - also called Third Generation Mobile Telephony) systems:
- on one side, a terminal (which is what many times is called "mobile telephone", including a casing, a screen, a keyboard, a power supply and several circuits); and
- on the other side, the smart card.

The smart card used in a mobile telephone must have either a SIM application (if GSM/GPRS is concerned) or a USIM application (if UMTS is concerned) installed.

The SIM (Subscriber Identity Module) application is a module or application authenticating the customer of the GSM/GPRS network in the network and storing personal information of the subscriber. The USIM (Universal Subscriber Identity Module in UMTS) application carries out the same functions as the SIM application, but for the UMTS network.

Basically, a customer in a mobile telephony network has a smart card identifying him or her as a customer and allowing him or her to gain access, through his or her terminal, to services provided by the operator of the mobile telephony network (and also to services offered by third parties, to which he or she can gain access through the mobile telephony network). However, the subscriber can freely change the terminal; to be able to operate with a new terminal, it is not necessary to contact the operator with whom he or she has the subscription; usually, it is sufficient to introduce his or her SIM/USIM smart card in the new terminal.

However, through the terminal of the mobile telephone, the subscriber can gain access to a plurality of services, among a range of services offered by the operator. Said services can include, for example:
- voice calls
- sending and receiving of short messages (within the framework of Short Message Service / SMS offered by the operator);
- access to communication by GPRS (General Packet Radio Service - data service in package mode superimposed over the infrastructure of the GSM networks);
- receiving information about promotions;
etc.

The range of services offered by an operator of a mobile telephony network continuously changes on a usual basis, among other reasons, due to the development of new technologies allowing for implementing such new services. However, when an operator introduces a new service, this service is not automatically available for all the subscribers. In some cases, this is due to the fact that some services require that the subscribers have terminals compatible with the service in question, i.e. terminals "supporting" the service. For example, many terminals currently existing on the market do not have the means for communicating by GPRS, thus the subscribers using these terminals cannot gain access to the GPRS service. On the other hand, it is many times required, for legal and/or commercial reasons, that the subscriber specifically subscribes to the new service before being able to gain access to the service.

A telecommunication network comprises a large number of nodes, among which the following can be mentioned:
1) The so-called "network nodes" which make the access of the subscriber to the network of the operator possible. For example, for a subscriber to be able to gain access to the GPRS network, the HLR (Home Location Register: this is a data register of a set of subscribers of a mobile service) network node must contain information necessary for said access, for example, the APNs (APN: Access Point Number) which the subscriber can use as an entry point in the GPRS network (the APNs indicate the networks to which the subscriber can gain access through GPRS) must be specified.
2) The so-called "information systems nodes": this group includes all these nodes in which the subscriber is registered and his or her "administrative" profile is saved. In those nodes, the information about which services the subscriber has subscribed to is stored, the billing/charging process is carried out, etc. The Customer Service Department or the like usually has access to these nodes.

For a client to be able to have access to a service (i.e. have use of the service), he or she not only needs a terminal supporting the service, but also has to have been "provisioned" for the service. Provisioning is the term used to refer to the process for registering, modifying or erasing data of a subscriber of a service in all the systems linked to said service, as well as the process for assigning the resources necessary for the subscriber to be able to use said service. In order for the subscriber to be able to use a service, he or she must be registered in a plurality of systems of the operator, such as for example:
- billing systems
- internal databases
- Customer Service systems
- systems for assigning network resources
- white lists and black lists

Basically, a subscriber who wishes to use a new service to which he or she has not been subscribed before, he or she can contact the Customer Service Department of the operator and ask that the operator registers him or her for the service, so that the Customer Service Department initiates the steps necessary for registering the subscriber and to "provision" him or her in all the systems/nodes in which he or she has to be registered to be able to enjoy the service. These include, for example, the network nodes (for example, the HLR), the billing systems, etc.

However, this process is complex and implies a significant delay the first time the subscriber wishes to gain access to a new service supposedly supported by his or her terminal: the subscriber has to contact the Customer Service Department, wait to be helped, and once helped, he or she has to wait until having been provisioned for the new service in all involved nodes (for example, in the HLR). This process can be inconvenient for the subscriber, both due to the effort of having to gain access to the Customer Service Department and due to the delay in the real access to the service.

On the other hand, this type of provisioning implies a significant load in the Customer Service Department of the operator.

Analyzing the methods with which a subscriber is currently provisioned in a certain service, it can be seen that the provisioning process is usually carried out in one of the following manners:
- initial provisioning by default: the subscriber is subscribed to a group of services which the operator has considered as suitable according to his or her profile (personal, company,...).
- massive provisioning: at a certain moment, the operator can consider it to be suitable to activate a service for all its clients or for all those complying with a certain criterion.
- provisioning due to the explicit request of the client: when the subscriber realizes that he or she is not subscribed to a service to which he or she wishes to gain access, for example, after receiving an error message upon attempting to use it, he or she requests the registration in this service by calling the Customer Service Department of the operator, according to what has been suggested previously.

Examples of automated service provisioning are provided by WO/004740 A and WO 97/07642 A.

Analyzing these current provisioning methods, two great drawbacks are seen. On one hand, with the massive and initial provisioning methods, it is possible for a subscriber to be subscribed to services which perhaps he or she never uses, either because his or her terminal does not have certain features necessary for gaining access to the service, or because he or she does not wish to use it. Registering many clients in services which they cannot nor wish to use can cause an unnecessary load on the corresponding nodes, requiring hardware and software (licenses) provisions that are unnecessary if the real necessities of the subscribers are taken into account. On the other hand, with the provisioning method for provisioning upon explicit request, the client probably has a poor initial perception of the service, when attempting to gain access to it and receiving an error message (there is even the risk that the client will not attempt to use said service again, understanding that it cannot be used).

Furthermore, there is currently another problem when the subscriber attempts to gain access to a service of the operator: many times it is necessary for the subscriber to have his or her device perfectly configured. Until now, what is usually done is to provide the subscriber with the terminal previously configured in the factory, or to give him or her some type of support to help him or her in the configuration thereof, or by means of a massive remote configuration. All these device configuration methods are very inflexible and entail difficulty for the subscriber.

Therefore, there is a necessity to develop a system allowing for simplification of the provisioning process, such that subscribers are provisioned only in services which they can use with the terminals which they are using, and such that this provisioning is carried out rather automatically, preferably without it being necessary for the Customer Service Department to intervene.

### DESCRIPTION OF THE INVENTION

A first aspect of the invention refers to a mobile telephony system, comprising:
a first table of a database including, for each one of a plurality of mobile telephone terminal types, provisioning indications relating to services supported by the terminal type (thus, one or several "provisioning indications", indicating what the system must do if a subscriber changes to a terminal of this type, can be established for each terminal type; for example, if the terminal type supports GPRS, the corresponding "provisioning indication" can be an indication that when a subscriber changes to this terminal type, the system must carry out a series of certain steps intended for modifying the profile of the subscriber in the HLR, to give him or her access to GPRS; another "provisioning indication" can indicate that if a subscriber changes to the terminal type in question, the system must send to the terminal of the subscriber a series of instructions for suitably "configuring" the terminal to be able to use a certain service; the expression "indication" should be understood broadly, since it can consist of any indication or information capable of triggering a series of actions in the system; for example, a provisioning indication can consist of a sole indication that the terminal supports a certain service, the system being configured so that said indication "triggers" the provisioning process for provisioning the subscriber for said service);
a second table of a database (the second table can be included in the same database as the first table, or in another database) including, for each one of a plurality of subscribers, a terminal identifier identifying the terminal used by the subscriber (the terminal identifier can be the International Mobile Station Equipment Identity -IMEI number, in which case the terminal type can be identified by means of the first 8 digits of the IMEI which constitute the so-called TAC, Type Allocation Code; the TAC is constituted of the first 8 digits of the IMEI and determines the terminal model to which an IMEI belongs; the TAC is the unification of Type Approval Code attributes - the first 6 digits of the IMEI- and FAC, Final Assembly Code - digits 7 and 8 of the IMEI); the first table can, therefore, have two columns, one for each TAC and another one for the provisioning indications (for example, indications of the services supported by the terminal);
at least one service access data register which must contain, as a condition so that the subscriber can gain access to a corresponding service, at least one piece of provisioning data corresponding to said service and subscriber (an example of this type of service data record can be the HLR which, so that the subscriber can enjoy a GPRS service, must contain the APNs which the subscriber can use as an entry point in the GPRS network);
change of terminal detection means configured to detect, from the terminal identifier, a change of terminal by a subscriber, from a previous terminal to a new terminal (this can be carried out by a module supervising the IMEI of the subscriber at all times and comparing it with the IMEI used previously; for example, if the used terminal identifier is the IMEI, comparing the current IMEI with that included in the second table; if it does not coincide, this is interpreted as a change of terminal, and the content of the second table can be modified and a provisioning process can be triggered, resorting to the different means described below);
terminal type detection means configured to detect a new terminal type corresponding to the new terminal (for example, if the used terminal identifier is the IMEI, the new terminal type can be identified from the first 8 digits -TAC- of the IMEI of the new terminal);
provisioning indication obtainment means configured to obtain, by means of gaining access to the first table and as a response to said change of terminal, the provisioning indications corresponding to the new terminal type (in the example given above, these means can be configured so that, "triggered" by the detection of a change of IMEI of the subscriber, they gain access to the first table and obtain the "indications" corresponding to the terminal "type" defined by the first 8 digits of the new IMEI, i.e. by the TAC of the new IMEI; on the basis of these indications, the system can carry out the operations necessary for provisioning the subscriber for the services supported by his or her new terminal);
provisioning means configured to provision the subscriber as a response to said change of terminal and according to said obtained provisioning indications, selectively incorporating to one or more of the service access data registers at least one piece of provisioning data corresponding to said provisioning indications (for example, in the case of a change to a terminal supporting GPRS, introducing in the HLR of the mobile telephony network the APNs which the subscriber can use as an entry point in the GPRS network; in other cases, the provisioning of the subscriber can consist of the suitable configuration of his or her terminal to be able to enjoy a service, etc.).

This system allows that, when it is detected that a subscriber changes terminals, the new terminal type can be determined (for example, detecting the change of IMEI), and, resorting to the first table, a series of operations that will automatically carried out by the system (or, at least, partially automatically) can be determined automatically so that the subscriber becomes provisioned (at least partially) for the services (or at least for some of the services) supported by his or her new terminal.

The means for detecting if a subscriber changes terminals can comprise:
means for obtaining a current terminal identifier corresponding to the terminal currently used by a subscriber (this can be carried out by analysing the MSISDN-IMEI pair in the signalling and billing messages circulating through the network; the MSISDN - telephone number or Mobile Station International ISDN Number - identifies the subscriber and the IMEI identifies his or her terminal; another way of obtaining the current IMEI can be to have a module checking the IMEI in the subscriber identification card -the U/SIM card-);
means for comparing said current terminal identifier with a previous terminal identifier corresponding to a terminal used on a previous occasion by the same subscriber (the MSISDN-IMEI pairs can be compared with the MSISDN-IMEI pairs previously detected and stored, for example, in the second table mentioned above; or, if the detection of the current IMEI is carried out by means of a module in the subscriber identification card, comparing the current IMEI - that corresponding to the terminal in which the card is introduced- with an IMEI recorded by the module the last time the card was introduced in a terminal; the module can thus detect if the IMEI is still the same and if it is no longer the same, it is understood that a change of terminal has occurred);
means for generating an event indicative of a change of terminal if the current terminal identifier differs from the previous terminal identifier (this event can be the one triggering the rest of the automatic provisioning process).

The provisioning means can be configured to introduce at least one piece of provisioning data corresponding to one service, in at least one of the service access data registers, only once the subscriber attempts to gain access for the first time to said service. For example, the system can be configured so that some of the provisioning data (for example, network node provisioning data) is immediately introduced in the corresponding service access data registers (for example, in the HLR) when the subscriber changes terminals, whereas other provisioning data, for example, that relating to the information systems nodes, is introduced in the data registers for access to corresponding services (for example, in a billing database) once the subscriber attempts to gain access to the service in question for the first time (for example, when he or she attempts to use the GPRS service for the first time). Thus, certain nodes with service provisioning data for services which the subscriber perhaps does not wish to use are prevented from being overloaded. The system can be configured so that the when the subscriber changes terminals, he or she is provisioned for the services supported by his or her terminal in the network nodes in which he or she has to be provisioned to be able to enjoy the service, whereas other nodes, not essential for the access to the service but necessary for certain administrative functions (for example, billing), only receive the corresponding provisioning data once the subscriber attempts to gain access to the service. A sensation of being provisioned in all the services and of being able to immediately gain access to the latter can thus be given to the subscriber, while at the same time the amount of provisioning data present in the nodes of the system, is reduced.

For example, for the GPRS service, a subscriber can gain access to the service once he or she has his or her APNs provisioned in the HLR. However, to be able to charge the service, it is necessary for the subscriber to be provisioned in the billing system. The subscriber is provisioned in the HLR when he or she changes to a terminal supporting the GPRS service, and when he or she uses the GPRS service for the first time, the system also provisions the subscriber in the corresponding billing system.

The system can be configured to save historical data relating to provisionings of the subscribers, and the provisioning means can be configured to provision the subscriber according to said historical data, such that when a subscriber changes terminals, only provisioning data corresponding to provisioning indications not previously applied to the subscriber is introduced in the service access data registers. Thus, provisionings are not repeated, i.e. once the subscriber has been provisioned for a service, if he or she changes to another terminal of the same type, he or she will not be provisioned in all the relevant nodes of the system again (although it is possible that some of the service access data registers have to be modified, for example, it may be necessary to configure the new terminal in a certain manner). The historical data can comprise a historical list of the terminals used by the subscriber, from which the provisioning indications applied to the subscriber can be inferred (for example, from the terminal type, obtaining said indications from the first table of the database).

As suggested above, one of the service access data registers can be the Home Location Register (HLR) and/or one of the service access data registers can be a register contained in the terminal of the mobile telephone of the subscriber and which corresponds to a part of the configuration of the terminal.

As already indicated, the terminal identifier can be the International Mobile Station Equipment Identity (IMEI). One part -the TAC- of the IMEI can constitute a terminal type identifier and the terminal type detection means can be configured to detect the new terminal type corresponding to the new terminal from said TAC.

Another aspect of the invention refers to a provisioning method for provisioning of a subscriber in a mobile telephony system comprising:
a first table of a database including, for each one of a plurality of mobile telephone terminal types, provisioning indications relating to services supported by the terminal type;
a second table of a database including, for each one of a plurality of subscribers, a terminal identifier used by the subscriber;
at least one service access data register which must contain, as a condition so that a subscriber can gain access to a corresponding service, at least one piece of provisioning data corresponding to said service and subscriber.

The method comprises the steps of:
detecting, from the terminal identifier, a change of terminal by a subscriber, from a previous terminal to a new terminal which in turn comprises obtaining a current terminal identifier corresponding to the terminal currently used by a subscriber, by analysing the MSISDN-IMEI pair in the signalling and billing messages circulating through the network;
detecting a new terminal type corresponding to the new terminal;
obtaining, by means of access to the first table and as a response to said change of terminal, the provisioning indications corresponding to the new terminal type;
provisioning the subscriber as a response to said change of terminal and according to said provisioning indications obtained, selectively incorporating to one or more of the service access data registers at least one piece of provisioning data corresponding to said provisioning indications.

All that has been said in relation to the system is also applicable to the method, *mutatis mutandis.*

The step of detecting a change of terminal can comprise the steps of:
obtaining a current terminal identifier corresponding to the terminal currently used by a subscriber;
comparing said current terminal identifier with a previous terminal identifier corresponding to a terminal used on a previous occasion by the same subscriber; and
generating an event indicative of a change of terminal if the current terminal identifier differs from the previous terminal identifier.

The method can comprise the step of introducing at least one piece of provisioning data corresponding to a service, in at least one of the service access data registers, only once the subscriber has attempted to gain access to said service for the first time.

Historical data relating to provisionings of the subscribers can be saved, and the subscribers can be provisioned according to said historical data, such that when a subscriber changes terminals, only provisioning data corresponding to provisioning indications not previously applied to the subscriber is introduced in the service access data registers.

The historical data can comprise a historical list of the terminals used by the subscriber, from which the provisioning indications applied to the subscriber on previous occasions can be inferred.

One or several of the service access data registers can be a Home Location Register (HLR).

One or several of the service access data registers can be a register contained in the terminal of the mobile telephone of the subscriber and which corresponds to a part of the configuration of the terminal.

The terminal identifier can be its International Mobile Station Equipment Identity (IMEI) number. One part (TAC) of the International Mobile Station Equipment Identity (IMEI) number can constitute a terminal type identifier and the new terminal type corresponding to the new terminal can be detected from said part of the International Mobile Station Equipment Identity (IMEI) number.

### BRIEF DESCRIPTION OF THE DRAWINGS

A series of drawings will be very briefly described below which help to better understand the invention and which are specifically related to embodiments of said invention, presented as illustrative and non-limiting examples thereof.

Figure 1 schematically shows a system according to a preferred embodiment of the invention.

Figure 2 schematically shows the system according to Figure 1, after a change of terminal by one of the subscribers.

Figure 3 schematically shows the system according to an alternative embodiment of the invention.

### DESCRIPTION OF PREFERRED EMBODIMENTS OF THE INVENTION

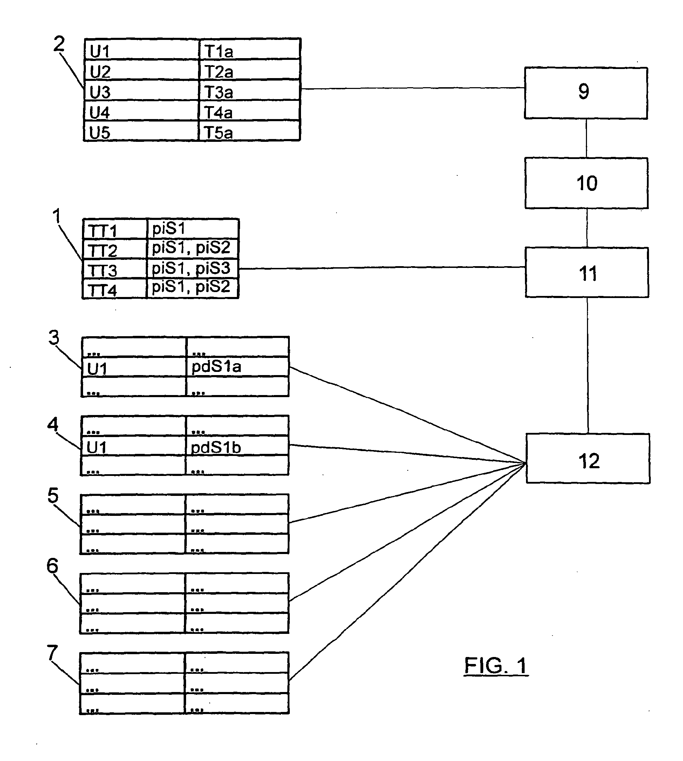

Figure 1 schematically shows the main elements of a system according to a preferred embodiment of the invention. As can be observed, the system comprises a first table (1) of a database including, for each one of a plurality of mobile terminal types (TT1, TT2, TT3, TT4), provisioning indications (piS1, piS2, piS3) relating to services (S1, S2, S3) supported by the terminal type (TT1, TT2, TT3, TT4). In this case,
- the terminal type TT1 supports the service S1,
- the terminal type TT2 supports the services S1 and S2,
- the terminal type TT3 supports the services S1 and S3, and
- the terminal type TT4 supports the services S1 and S2.

Furthermore, the system comprises:
a second table (2) of a database (which can be the same database housed in the first table) including, for each one of a plurality of subscribers (U1, U2, U3, U4, U5), a terminal identifier (T1a; T2a; T3a; T4a; T5a) of the terminal used by the subscriber;
at least one service access data register (3, 4, 5, 6, 7) which must contain, as a condition so that a subscriber (U1) can gain access to a corresponding service (S1), at least one piece of provisioning data (pdS1a, pdS1b) corresponding to said service and subscriber;
change of terminal-detection means (9) configured to detect, from the terminal identifier, a change of terminal by a subscriber from a previous terminal to a new terminal;
terminal type detection means (10) configured to detect a new terminal type corresponding to the new terminal;
provisioning indication obtainment means (11) configured to obtain, by means of access to the first table (1) and as a response to said change of terminal, the provisioning indications corresponding to the new terminal type; and
provisioning means (12) configured to provision the subscriber as a response to said change of terminal and according to said provisioning indications obtained, selectively incorporating to one or more of the service access data registers (5, 6) at least one piece of provisioning data corresponding to said provisioning indications.

In this case and as an illustrative example, it can be assumed that the terminal of the subscriber U1, identified by the code T1a, which can represent the IMEI of the terminal, is of the type TT1 (the terminal type can be known from the TAC, which are the first 8 digits of the IMEI). The service access data registers 3 and 4 include provisioning data pdS1a and pdS1b, respectively, corresponding to the subscriber U1. Thus, the subscriber can gain access to the service S1. However, assume that the subscriber U1 changes terminals and obtains a new terminal, the IMEI of which corresponds to T1b.

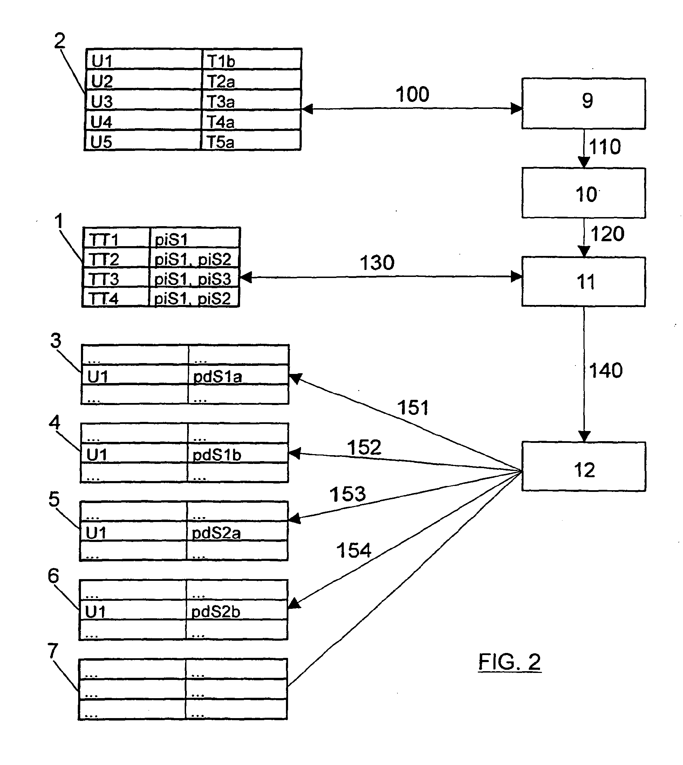

Then, the situation shown in Figure 2 can be reached, in which Figure the arrows represent different steps which are carried out and which involve the corresponding modules of the system. In Figure 2, it can be seen how, in the second table (2), the terminal identifier of one of the subscribers (U1) has changed from T1a to T1 b, since the subscriber has changed terminals and the new terminal has a different IMEI than that of the previous terminal.

This is detected (step 100) by the change of terminal detection means (9) (for example, with some of the methods described above), which activate (in a step 110 schematically shown in Figure 2) the terminal type detection means (10), which receive the new IMEI (T1b) from the change of terminal detection means (9). The terminal type detection means (10) determine the terminal type from the first 8 digits of the IMEI (i.e. from the TAC), and activate (step 120) the provisioning indication obtainment means (11), which receive the TAC identifying the terminal type.

Assume that the TAC identifies the terminal type TT4 and that this terminal type supports the services S1 and S2. The first table (1) includes, for the terminal type TT4, a first set of provisioning indications piS1 for the service S1 and a second set of provisioning indications piS2 for the service S2 (these indications can consist of something as simple as a mere indication that the terminal in question supports the respective service). The provisioning indication obtainment means (11) request and obtain (step 130) said provisioning indications from the first table (1), requesting the provisioning indications corresponding to the terminal type TT4.

Once said provisioning indications are obtained, the provisioning indication obtainment means (11) activate the provisioning means (12) (step 140) and the provisioning indications (piS1, piS2) (for example, an indication that the terminal supports the services S1 and S2) are transmitted thereto. From these indications, the provisioning means (12) incorporate (steps 151-154) to the service access data registers (3, 4, 5, 6) corresponding to the services S1 and S2 the provisioning data (pdS1a, pdS1b, pdS2a, pdS2b) corresponding to said provisioning indications (piS1, piS2). The service access data registers will thus contain the provisioning data necessary so that the subscriber is able to gain access to the corresponding service (in this case, to the services S1 and S2 supported by the terminal type TT4).

The provisioning means (12) can be configured to introduce at least one piece of provisioning data (pdS2b) corresponding to a service (S2) in at least one of the service access data registers (6) only once the subscriber has attempted to gain access to said service for the first time. This can mean, taking the system in Figure 2 as an example, that the step 153 corresponding to the service access data register 5 (for example, an HLR) is carried out immediately, such that the register 5 receives certain data pdS2a necessary so that the subscriber is able to gain access to the service in a quick manner once the subscriber has obtained a terminal supporting the service. However, another service access data register, such as a register 6 important for billing, only receives -step 154- the data pdS2b necessary for the billing once the subscriber has attempted to gain access to the service S2 for the first time. That is to say, in the case of Figure 2, the step 153 would be carried out quickly once the subscriber has obtained the new terminal, but the step 154 would not be carried out as long as the subscriber does not attempt to gain access to the corresponding service.

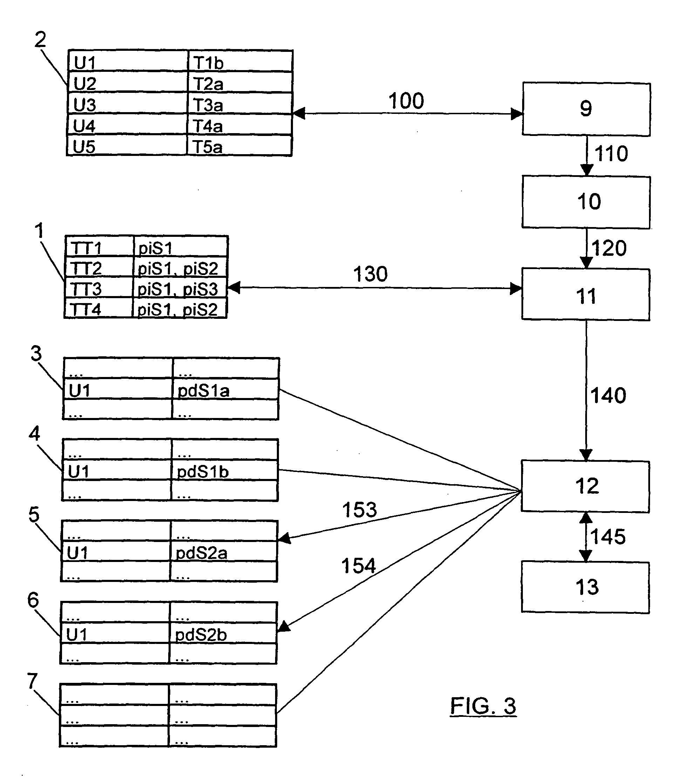

Figure 3 shows a configuration analogous to that in Figure 2, and the analogous elements and steps are indicated with the same reference numbers. However, the system of Figure 3 is configured to save historical data (13) relating to provisionings of the subscribers, and the provisioning means (12) are configured to provision the subscribers according to said historical data (13), such that when a subscriber changes terminals, only provisioning data corresponding to provisioning indications (piS2) not previously applied to the subscriber is introduced in the service access data registers. For example, the historical provisioning data (13) can comprise a historical list of the terminals used by the subscriber, from which the provisioning indications applied to the subscriber can be inferred.

In the case of Figure 3, when a change of terminal is detected (from T1a to T1b) the same steps 110-140 already discussed in relation to Figure 2, are carried out. However, before modifying the content of the service access data registers, the provisioning means (12) consult (step 145) the historical data and detect that the subscriber has already had a terminal type TT1 and, therefore, that he or she has been provisioned for the service S1. Therefore it is understood that it is not necessary to provision the subscriber U1 for said service again, and the provisioning means disregard the provisioning indications piS1 and only act according to the provisioning indications corresponding to the service S2, i.e. piS2, carrying out the steps 153 and 154 (introducing the provisioning data pdS2a and pdS2b in the service access data registers 5 and 6, respectively).

Some practical examples of application of the invention are set forth below:

### 1) Provisioning for the GPRS service

Purpose: to detect the subscribers who begin using a terminal supporting GPRS for the first time, to provision them in the corresponding HLRs so that they can immediately gain access to the GPRS service (the alternative of massive provisioning of all the subscribers for the GPRS service would imply a higher load on the involved nodes of the network).

### The process:

a) It is checked, for a predetermined time interval, which subscribers have changed terminals during said interval (this can be detected due to the change of IMEI, for example, with some of the processes described above).
b) It is checked which of the subscribers who have changed terminals (step a) have begun to use a terminal supporting GPRS; basically it is checked which is the terminal type, from the first 8 digits of the IMEI (TAC), and it is checked if said terminal type supports GPRS, for example, consulting a table of a database which indicates the services supported for each terminal type; this table would correspond to the first table (1) of Figure 3.
c) Once it has been determined which are the subscribers who have changed to a GPRS terminal (steps a and b), it is determined which of them have never used a terminal supporting GPRS (this can be carried out resorting to a historical data module 13 in which there is a "flag" field with the date of the first detection of a terminal supporting GPRS for the subscriber in question; by consulting that field, it can be known if the client has used a GPRS terminal or not at any previous time).
d) Once it has been determined which are the subscribers who have changed to a GPRS terminal for the first time (i.e. who have never used a GPRS terminal before), this information is supplied to a provisioning subsystem (which would form part of the provisioning means of the invention) which changes the profile of these subscribers in the HLR (adding the corresponding APNs), such that said subscribers can gain access to GPRS. In this case, the provisioning "subsystem" only needs to know that the subscriber in question must be provisioned for the GPRS service; the subsystem itself can have other precise data for carrying out the provisioning. Therefore, if this case is compared with the system of Figure 3, it can be observed that the provisioning indication in the first table (1) can consist of a single piece of data, specifically, of an indication that the terminal type supports GPRS. The provisioning means 12 themselves are configured to "interpret" this "indication" and to consequently modify the registers of the HLR.

Once the relevant registers of the HLR have been modified (with the introduction of the corresponding APNs), the subscriber can enjoy the service. However, it is also necessary for the operator that the subscriber using GPRS is registered or provisioned in the CRM (Customer Relationship Management: tools for managing relationships with customers) and Billing systems. Logically, the provisioning means can be configured to provision the subscriber in these systems also, in the same step (d), i.e. at the same time that they modify the subscriber profile in the HLR. However, this would mean introducing in the corresponding nodes (CRM and billing) data which possibly is not necessary, since it is not known if the subscriber is really going to use the GPRS service.

To that end, the system is configured to initially modify only the HLR and to
(e) detect, when a subscriber gains access to GPRS, if it is a first-time access to the GPRS service (this can be carried out from the CDRs - Call Detail Record - of GPRS: the first time that a CDR of GPRS is gathered for a subscriber -MSISDN-corresponds to the first time the subscriber gains access to GPRS); and
(f) when it detects a first-time access to GPRS, supply the corresponding information (subscriber data) to the CRM (Customer Relationship Management) platform and to the billing system, so that the subscriber is provisioned in said systems.

### II) Provisioning for the MMS (Multimedia Message Service) service:

Purpose: to detect the subscribers who begin using a terminal supporting MMS for the first time, to provision them in the CRM (Customer Relationship Management), Promotions, MML (Multimedia Messaging Library), and MMSC (Multimedia Messaging Service Centre) systems.

### The process:

(a)-(d): Steps (a)-(d) are carried out in a manner similar to that described in the previous example, but rather than detecting if the new terminal supports GPRS, it is checked if it supports MMS. The provisioning subsystem then modifies the content of the relevant service access data registers in the CRM (Customer Relationship Management), Promotions, MML (Multimedia Messaging Library), and MMSC (Multimedia Messaging Service Centre) systems.

### (III) Provisioning for a promotion service aimed at subscribers of terminals supporting WAP:

Purpose: to detect the subscribers who begin using a terminal supporting WAP for the first time, for their provisioning in a promotion platform.

### The process:

(a)-(d): Steps (a)-(d) are carried out in a manner similar to that described in the previous example, but rather than detecting if the new terminal supports GPRS, it is checked if it supports WAP. The provisioning subsystem then modifies the content of the relevant service access data register for accessing service of a promotion platform, such that the subscriber receives promotion deliveries managed by said platform.

Throughout the present description and claims, the word "comprise" and variations thereof, such as "comprising", do not intend to exclude other steps or components.

## Claims

1. A mobile telephony system, **characterized in that** it comprises:
a first table (1) of a database including, for each one of a plurality of mobile telephone terminal types (TT1, TT2, TT3, TT4), provisioning indications (piS1, piS2, piS3) relating to services supported by the terminal type (TT1, TT2, TT3, TT4);
a second table (2) of a database including, for each one of a plurality of subscribers (U1, U2, U3, U4, U5), a terminal identifier (T1a, T1b; T2a; T3a; T4a; T5a) of the terminal used by the subscriber (U1, U2, U3, U4, U5);
at least one service access data register (3, 4, 5, 6, 7) which must contain, as a condition so that a subscriber (U1) can gain access to a corresponding service (S1, S2), at least one piece of provisioning data (pdS1a, pdS1b; pdS2a, pdS2b) corresponding to said service and subscriber;
change of terminal detection means (9) configured to detect, from the terminal identifier (T1a, T1b), a change of terminal by a subscriber (U1), from a previous terminal to a new terminal; said change of terminal detection means (9) comprising
- means for obtaining a current terminal identifier corresponding to the terminal currently used by a subscriber which include analysis means of the MSISDN-IMEI pair in the signalling and billing messages circulating through the network;
terminal type detection means (10) configured to detect a new terminal type (TT4) corresponding to the new terminal (T1b);
provisioning indication obtainment means (11) configured to obtain, by means of gaining access to the first table (1) and as a response to said change of terminal, the provisioning indications (piS1, piS2) corresponding to the new terminal type (TT4);
provisioning means (12) configured to provision the subscriber as a response to said change of terminal and according to said provisioning indications (piS1, piS2) obtained, selectively incorporating to one or more of the service access data registers (3, 4, 5, 6) at least one piece of provisioning data (pdS1a, pdS1b; pdS2a, pdS2b) corresponding to said provisioning indications (piS1, piS2);
further **characterized in that** the system is configured to save historical data (13) relating to provisionings of the subscribers, the means for provisioning being configured to provision the subscribers according to said historical data (13), such that when a subscriber changes terminals, only provisioning data corresponding to provisioning indications (piS2) not previously applied to the subscriber is introduced in the service access data registers.

2. A system according to claim 1, **characterized in that** the means for detecting if a subscriber changes terminals further comprise:
means for comparing said current terminal identifier with a previous terminal identifier corresponding to a terminal used on a previous occasion by the same subscriber;
means for generating an event indicative of a change of terminal if the current terminal identifier differs from the previous terminal identifier.

3. A system according to any of the previous claims, **characterized in that** the provisioning means (12) are configured to introduce at least one piece of provisioning data (pdS2b) corresponding to a service in at least one of the service access data registers (6) only once the subscriber has attempted to access said service for the first time.

4. A system according to any of the previous claims, **characterized in that** the historical provisioning data (13) comprises a historical list of the terminals used by the subscriber, from which the provisioning indications (piS1) applied to the subscriber can be inferred.

5. A system according to any of the previous claims, **characterized in that** at least one of the service access data registers is a Home Location Register (HLR).

6. A system according to any of the previous claims, **characterized in that** at least one of the service access data registers is a register contained in the mobile terminal of the subscriber and which corresponds to a part of the configuration of the terminal.

7. A system according to any of the previous claims, **characterized in that** the terminal identifier is the International Mobile Station Equipment Identity (IMEI) number of the terminal.

8. A system according to claim 7, **characterized in that** one part of the International Mobile Station Equipment Identity (IMEI) number constitutes a terminal type identifier, and **in that** the terminal type detection means (10) are configured to detect the new terminal type (TT4) corresponding to the new terminal (T1b) from said part of the International Mobile Station Equipment Identity (IMEI) number.

9. A provisioning method for provisioning a subscriber in a mobile telephony system, comprising: a first table (1) of a database including, for each one of a plurality of mobile telephone terminal types (TT1, TT2, TT3, TT4), provisioning indications (piS1, piS2, piS3) relating to services supported by the terminal type (TT1, TT2, TT3, TT4); a second table (2) of a database including, for each one of a plurality of subscribers (U1, U2, U3, U4, U5), a terminal identifier (T1a, T1b; T2a; T3a; T4a; T5a) of the terminal used by the subscriber (U1, U2, U3, U4, U5); and at least one service access data register (3, 4, 5, 6, 7) which must contain, as a condition so that a subscriber (U1) can gain access to a corresponding service (S1, S2), at least one piece of provisioning data (pdS1a, pdS1b; pdS2a, pdS2b) corresponding to said service and subscriber;
**characterized in that** the method comprises the steps of:
detecting, from the identifier (T1a, T1b) of the terminal, a change of terminal by a subscriber (U1) from a previous terminal to a new terminal, which in turn comprises obtaining a current terminal identifier corresponding to the terminal currently used by a subscriber, by analysing the MSISDN-IMEI pair in the signalling and billing messages circulating through the network;
detecting a new terminal type (TT4) corresponding to the new terminal (T1b);
obtaining, by means of gaining access to the first table (1) and as a response to said change of terminal, the provisioning indications (piS1, piS2) corresponding to the new terminal type (TT4); and
provisioning the subscriber as a response to said change of terminal and according to said provisioning indications (piS1, piS2) obtained, selectively incorporating to one or more of the service access data registers (3, 4, 5, 6) at least one piece of provisioning data (pdS1a, pdS1b; pdS2a, pdS2b) corresponding to said provisioning indications (piS1, piS2);
further **characterized in that** historical data (13) relating to provisionings of the subscribers is saved, and the subscribers are provisioned according to said historical data (13), such that when a subscriber changes terminals, only provisioning data corresponding to provisioning indications (piS2) not previously applied to the subscriber is introduced in the service access data registers.

10. A method according to claim 9, **characterized in that** the step of detecting a change of terminal comprises the steps of:
comparing said current terminal identifier with a previous terminal identifier corresponding to a terminal used on a previous occasion by the same subscriber; and
generating an event indicative of a change of terminal if the current terminal identifier differs from the previous terminal identifier.

11. A method according to any of claims 9 and 10, **characterized in that** it comprises the step of introducing at least one piece of provisioning data (pdS2b) corresponding to a service in at least one of the service access data registers (6) only once the subscriber has attempted to gain access to said service for the first time.

12. A method according to any of claims 9-11, **characterized in that** the historical provisioning data (13) comprises a historical list of the terminals used by the subscriber, from which the provisioning indications applied to the subscriber can be inferred.

13. A method according to any of claims 9-12, **characterized in that** at least one of the service access data registers is a Home Location Register (HLR).

14. A method according to any of claims 9-13, **characterized in that** at least one of the service access data registers is a register contained in the mobile terminal of the subscriber and which corresponds to a part of the configuration of the terminal.

15. A method according to any of claims 9-14, **characterized in that** the terminal identifier is the International Mobile Station Equipment Identity (IMEI) number.

16. A method according to claim 15, **characterized in that** one part of the International Mobile Station Equipment Identity (IMEI) number constitutes a terminal type identifier, and the new terminal type (TT4) corresponding to the new terminal (T1 b) is detected from said part of the International Mobile Station Equipment Identity (IMEI) number.

## Patentansprüche

1. Mobiltelefonsystem, **dadurch gekennzeichnet, dass** es umfasst:
eine erste Tabelle (1) einer Datenbank, welche für jeden von mehreren Mobiltelefon-Endgerätetypen (TT1, TT2, TT3, TT4) Versorgungsangaben (piS1, piS2, piS3) enthält, die sich auf Dienste beziehen, die von dem Endgerätetyp (TT1, TT2, TT3, TT4) unterstützt werden;
eine zweite Tabelle (2) einer Datenbank, welche für jeden von mehreren Teilnehmern (U1, U2, U3, U4, U5) eine Endgerätekennung (T1a, T1b; T2a; T3a; T4a; T5a) des Endgerätes enthält, das von dem Teilnehmer (U1, U2, U3, U4, U5) verwendet wird;
mindestens ein Dienstzugangs-Datenregister (3, 4, 5, 6, 7), welches als eine Bedingung dafür, dass ein Teilnehmer (U1) Zugang zu einem entsprechenden Dienst (S1, S2) erhalten kann, mindestens ein Element von Versorgungsdaten (pdS1a, pdS1b; pdS2a, pdS2b) enthalten muss, die dem Dienst und dem Teilnehmer entsprechen;
Endgerätewechsel-Detektionsmittel (9), die dafür konfiguriert sind, aus der Endgerätekennung (T1a, T1b) einen durch einen Teilnehmer (U1) vollzogenen Endgerätewechsel von einem vorhergehenden Endgerät zu einem neuen Endgerät zu detektieren; wobei die Endgerätewechsel-Detektionsmittel (9) umfassen
- Mittel zum Beziehen einer aktuellen Endgerätekennung, die dem gegenwärtig von einem Teilnehmer verwendeten Endgerät entspricht, welche Mittel zur Analyse des MISISDN-IMEI-Paares in den durch das Netz zirkulierenden Signalisierungs- und Vergebührungsnachrichten beinhalten;
Endgerätetyp-Detektionsmittel (10), die dafür konfiguriert sind, einen neuen Endgerätetyp (TT4) zu detektieren, der dem neuen Endgerät (T1b) entspricht;
Versorgungsangaben-Bezugsmittel (11), die dafür konfiguriert sind, mittels Erlangung eines Zugangs zu der ersten Tabelle (1) und in Reaktion auf den Endgerätewechsel die Versorgungsangaben (piS1, piS2) zu beziehen, die dem neuen Endgerätetyp (TT4) entsprechen;
Versorgungsmittel (12), die dafür konfiguriert sind, den Teilnehmer in Reaktion auf den Endgerätewechsel und entsprechend den bezogenen Versorgungsangaben (piS1, piS2) zu versorgen, indem sie selektiv in eines oder mehrere der Dienstzugangs-Datenregister (3, 4, 5, 6) mindestens ein Element von Versorgungsdaten (pdS1a, pdS1b; pdS2a, pdS2b) integrieren, die den Versorgungsangaben (piS1, piS2) entsprechen;
ferner **dadurch gekennzeichnet, dass** das System dafür konfiguriert ist, historische Daten (13) zu speichern, die sich auf Versorgungen der Teilnehmer beziehen, wobei die Mittel zum Versorgen dafür konfiguriert sind, die Teilnehmer entsprechend den historischen Daten (13) zu versorgen, so dass, wenn ein Teilnehmer die Endgeräte wechselt, nur Versorgungsdaten, welche Versorgungsangaben (piS2) entsprechen, die nicht zuvor auf den Teilnehmer angewendet wurden, in die Dienstzugangs-Datenregister eingespeist werden.

2. System nach Anspruch 1, **dadurch gekennzeichnet, dass** die Mittel zum Detektieren, ob ein Teilnehmer die Endgeräte wechselt, ferner umfassen:
Mittel zum Vergleichen der aktuellen Endgerätekennung mit einer vorhergehenden Endgerätekennung, die einem Endgerät entspricht, das bei einer vorhergehenden Gelegenheit von demselben Teilnehmer verwendet wurde;
Mittel zum Erzeugen eines Ereignisses, das hinsichtlich eines Endgerätewechsels indikativ ist, falls sich die aktuelle Endgerätekennung von der vorhergehenden Endgerätekennung unterscheidet.

3. System nach einem der vorhergehenden Ansprüche, **dadurch gekennzeichnet, dass** die Versorgungsmittel (12) dafür konfiguriert sind, erst dann mindestens ein Element von Versorgungsdaten (pdS2b), die einem Dienst entsprechen, in mindestens eines der Dienstzugangs-Datenregister (6) einzuspeisen, nachdem der Teilnehmer erstmals versucht hat, auf den Dienst zuzugreifen.

4. System nach einem der vorhergehenden Ansprüche, **dadurch gekennzeichnet, dass** die historischen Versorgungsdaten (13) eine historische Liste der von dem Teilnehmer verwendeten Endgeräte umfassen, aus welcher die Versorgungsangaben (piS1), die auf den Teilnehmer angewendet wurden, abgeleitet werden können.

5. System nach einem der vorhergehenden Ansprüche, **dadurch gekennzeichnet, dass** mindestens eines der Dienstzugangs-Datenregister ein Heimatregister (Home Location Register, HLR) ist.

6. System nach einem der vorhergehenden Ansprüche, **dadurch gekennzeichnet, dass** mindestens eines der Dienstzugangs-Datenregister ein Register ist, das in dem mobilen Endgerät des Teilnehmers enthalten ist und welches einem Teil der Konfiguration des Endgerätes entspricht.

7. System nach einem der vorhergehenden Ansprüche, **dadurch gekennzeichnet, dass** die Endgerätekennung die internationale Mobilfunkgerätekennung (International Mobile Station Equipment Identity, IMEI) des Endgerätes ist.

8. System nach Anspruch 7, **dadurch gekennzeichnet, dass** ein Teil der internationalen Mobilfunkgerätekennung (IMEI) eine Endgerätetypen-Kennung darstellt, und **dadurch**, dass die Endgerätetyp-Detektionsmittel (10) dafür konfiguriert sind, den neuen Endgerätetyp (TT4), der dem neuen Endgerät (T1b) entspricht, aus diesem Teil der internationalen Mobilfunkgerätekennung (IMEI) zu detektieren.

9. Versorgungsverfahren zum Versorgen eines Teilnehmers in einem Mobiltelefonsystem, welches umfasst: eine erste Tabelle (1) einer Datenbank, welche für jeden von mehreren Mobiltelefon-Endgerätetypen (TT1, TT2, TT3, TT4) Versorgungsangaben (piS1, piS2, piS3) enthält, die sich auf Dienste beziehen, die von dem Endgerätetyp (TT1, TT2, TT3, TT4) unterstützt werden; eine zweite Tabelle (2) einer Datenbank, welche für jeden von mehreren Teilnehmern (U1, U2, U3, U4, U5) eine Endgerätekennung (T1a, T1b; T2a; T3a; T4a; T5a) des Endgerätes enthält, das von dem Teilnehmer (U1, U2, U3, U4, U5) verwendet wird; und mindestens ein Dienstzugangs-Datenregister (3, 4, 5, 6, 7), welches als eine Bedingung dafür, dass ein Teilnehmer (U1) Zugang zu einem entsprechenden Dienst (S1, S2) erhalten kann, mindestens ein Element von Versorgungsdaten (pdS1a, pdS1b; pdS2a, pdS2b) enthalten muss, die dem Dienst und dem Teilnehmer entsprechen;
**dadurch gekennzeichnet, dass** das Verfahren die folgenden Schritte umfasst:
Detektieren eines durch einen Teilnehmer (U1) vollzogenen Endgerätewechsels von einem vorhergehenden Endgerät zu einem neuen Endgerät aus der Kennung (T1a, T1b) des Endgerätes, welches wiederum das Beziehen einer aktuellen Endgerätekennung, die dem gegenwärtig von einem Teilnehmer verwendeten Endgerät entspricht, durch Analysieren des MISISDN-IMEI-Paares in den durch das Netz zirkulierenden Signalisierungs- und Vergebührungsnachrichten umfasst;
Detektieren eines neuen Endgerätetyps (TT4), der dem neuen Endgerät (T1b) entspricht;
Beziehen, mittels Erlangung eines Zugangs zu der ersten Tabelle (1) und in Reaktion auf den Endgerätewechsel, der Versorgungsangaben (piS1, piS2), die dem neuen Endgerätetyp (TT4) entsprechen; und
Versorgen des Teilnehmers in Reaktion auf den Endgerätewechsel und entsprechend den bezogenen Versorgungsangaben (piS1, piS2) durch selektives Integrieren mindestens eines Elements von Versorgungsdaten (pdS1a, pdS1b; pdS2a, pdS2b), die den Versorgungsangaben (piS1, piS2) entsprechen, in eines oder mehrere der Dienstzugangs-Datenregister (3, 4, 5, 6);
ferner **dadurch gekennzeichnet, dass** historische Daten (13), die sich auf Versorgungen der Teilnehmer beziehen, gespeichert werden und die Teilnehmer entsprechend den historischen Daten (13) versorgt werden, so dass, wenn ein Teilnehmer die Endgeräte wechselt, nur Versorgungsdaten, welche Versorgungsangaben (piS2) entsprechen, die nicht zuvor auf den Teilnehmer angewendet wurden, in die Dienstzugangs-Datenregister eingespeist werden.

10. Verfahren nach Anspruch 9, **dadurch gekennzeichnet, dass** der Schritt des Detektierens eines Endgerätewechsels die folgenden Schritte umfasst:
Vergleichen der aktuellen Endgerätekennung mit einer vorhergehenden Endgerätekennung, die einem Endgerät entspricht, das bei einer vorhergehenden Gelegenheit von demselben Teilnehmer verwendet wurde; und
Erzeugen eines Ereignisses, das hinsichtlich eines Endgerätewechsels indikativ ist, falls sich die aktuelle Endgerätekennung von der vorhergehenden Endgerätekennung unterscheidet.

11. Verfahren nach einem der Ansprüche 9 oder 10, **dadurch gekennzeichnet, dass** es den Schritt umfasst, erst dann mindestens ein Element von Versorgungsdaten (pdS2b), die einem Dienst entsprechen, in mindestens eines der Dienstzugangs-Datenregister (6) einzuspeisen, nachdem der Teilnehmer erstmals versucht hat, auf den Dienst zuzugreifen.

12. Verfahren nach einem der Ansprüche 9-11, **dadurch gekennzeichnet, dass** die historischen Versorgungsdaten (13) eine historische Liste der von dem Teilnehmer verwendeten Endgeräte umfassen, aus welcher die Versorgungsangaben, die auf den Teilnehmer angewendet wurden, abgeleitet werden können.

13. Verfahren nach einem der Ansprüche 9-12, **dadurch gekennzeichnet, dass** mindestens eines der Dienstzugangs-Datenregister ein Heimatregister (Home Location Register, HLR) ist.

14. Verfahren nach einem der Ansprüche 9-13, **dadurch gekennzeichnet, dass** mindestens eines der Dienstzugangs-Datenregister ein Register ist, das in dem mobilen Endgerät des Teilnehmers enthalten ist und welches einem Teil der Konfiguration des Endgerätes entspricht.

15. Verfahren nach einem der Ansprüche 9-14, **dadurch gekennzeichnet, dass** die Endgerätekennung die internationale Mobilfunkgerätekennung (International Mobile Station Equipment Identity, IMEI) ist.

16. Verfahren nach Anspruch 15, **dadurch gekennzeichnet, dass** ein Teil der internationalen Mobilfunkgerätekennung (IMEI) eine Endgerätetypen-Kennung darstellt und der neue Endgerätetyp (TT4), der dem neuen Endgerät (T1b) entspricht, aus diesem Teil der internationalen Mobilfunkgerätekennung (IMEI) detektiert wird.

## Revendications

1. Système de téléphonie mobile, **caractérisé en ce qu'**il comprend :
une première table (1) d'une base de données comprenant, pour chacun d'une pluralité de types de terminal téléphonique mobile (TT1, TT2, TT3, TT4), des indications d'approvisionnement (piS1, piS2, piS3) relatives aux services pris en charge par le type de terminal (TT1, TT2, TT3, TT4) ;
une seconde table (2) d'une base de données comprenant pour chacun d'une pluralité d'abonnés (U1, U2, U3, U4, U5), un identifiant de terminal (T1a, T1b ; T2a ; T3a ; T4a ; T5a) du terminal utilisé par l'abonné (U1, U2, U3, U4, U5) ;
au moins un enregistreur de données d'accès aux services (3, 4, 5, 6, 7) qui doit contenir, en tant que condition pour qu'un abonné (U1) puisse avoir accès à un service correspondant (S1, S2), au moins une partie des données d'approvisionnement (pds1a, pdS1b ; pdS2a, pdS2b) correspondant auxdits service et abonné ;
des moyens de détection de changement de terminal (9) configurés de manière à détecter, à partir d'un identifiant de terminal (T1a, T1b), un changement de terminal par un abonné (U1), d'un précédent terminal à un nouveau terminal ; lesdits moyens de détection de changement de terminal (9) comprenant
- des moyens d'obtention d'un identifiant de terminal actuel correspondant au terminal actuellement utilisé par un abonné qui comprennent des moyens d'analyse de la paire MSISDN-IMEI dans les messages de signalisation et de facturation circulant à travers le réseau ;
des moyens de détection du type de terminal (10) configurés de manière à détecter un nouveau type de terminal (TT4) correspondant au nouveau terminal (T1b) ;
des moyens d'obtention des indications d'approvisionnement (11) configurés de manière à obtenir, au moyen de l'accès à la première table (1) et en tant que réponse audit changement de terminal, les indications d'approvisionnement (pis1, piS2) correspondant au nouveau type de terminal (TT4) ;
des moyens d'approvisionnement (12) configurés de manière à approvisionner l'abonné en tant que réponse audit changement de terminal et en fonction desdites indications d'approvisionnement (pis1, piS2) obtenues, incorporant de manière sélective à un ou plusieurs enregistreurs de données d'accès aux services (3, 4, 5, 6) au moins - une partie des données d'approvisionnement (pds1a, pds1b; pdS2a, pdS2b) correspondant auxdites indications d'approvisionnement (pis1, piS2) ;
**caractérisé en outre en ce que** le système est configuré de manière à enregistrer les données historiques (13) relatives aux approvisionnements des abonnées, les moyens d'approvisionnement étant configurés de manière à approvisionner les abonnés en fonction desdites données historiques (13), de sorte que lorsqu'un abonné change de terminaux, seules les données d'approvisionnement correspondant aux indications d'approvisionnement (piS2) qui n'avaient pas été précédemment appliquées à l'abonné sont introduites dans les enregistreurs de données d'accès aux services.

2. Système selon la revendication 1, **caractérisé en ce que** les moyens pour détecter si un abonné change de terminaux comprennent :
des moyens de comparaison dudit actuel identifiant de terminal avec un précédent identifiant de terminal correspondant à un terminal utilisé lors d'une précédente occasion par le même abonné ;
des moyens de génération d'un événement indiquant un changement de terminal si l'actuel identifiant de terminal diffère du précédent identifiant de terminal.

3. Système selon l'une quelconque des revendications précédentes, **caractérisé en ce que** les moyens de d'approvisionnement (12) sont configurés de manière à introduire au moins une partie des données d'approvisionnement (pdS2b) correspondant à un service dans au moins l'un des enregistreurs de données d'accès aux services (6) une fois seulement que l'abonné a tenté d'accéder audit service pour la première fois.

4. Système selon l'une quelconque des revendications précédentes, **caractérisé en ce que** les données d'approvisionnement historiques (13) comprennent une liste historique des terminaux utilisés par l'abonné, à partir de laquelle les indications d'approvisionnement (piS1) appliquées à l'abonné peuvent être déduites.

5. Système selon l'une quelconque des revendications précédentes, **caractérisé en ce qu'**au moins l'un des enregistreurs de données d'accès aux services est un Enregistreur de location nominal (HLR).

6. Système selon l'une quelconque des revendications précédentes, **caractérisé en ce que** au moins l'un des enregistreurs de données d'accès aux services est un enregistreur contenu dans le terminal mobile de l'abonné et qui correspond à une partie de la configuration du terminal.

7. Système selon l'une quelconque des revendications précédentes, **caractérisé en ce que** l'identifiant de terminal est le numéro d'Identité Internationale d'Equipement Mobile (IMEI) du terminal.

8. Système selon la revendication 7, **caractérisé en ce qu'**une partie du numéro d'Identité Internationale d'Equipement Mobile (IMEI) constitue un identifiant de type de terminal, et **en ce que** les moyens de détection du type de terminal (10) sont configurés de manière à détecter le nouveau type de terminal (TT4) correspondant au nouveau terminal (T1b) à partir de ladite partie du numéro d'Identité Internationale d'Equipement Mobile (IMEI).

9. Procédé d'approvisionnement pour approvisionner un abonné dans un système de téléphonie mobile, comprenant : une première table (1) d'une base de données comprenant, pour chacun d'une pluralité de types de terminal téléphonique mobile (TT1, TT2, TT3, TT4), des indications d'approvisionnement (pis1, piS2, piS3) relatives aux services pris en charge par le type de terminal (TT1, TT2, TT3, TT4) ; une seconde table (2) d'une base de données comprenant, pour chacun d'une pluralité d'abonnés (U1, U2, U3, U4, U5), un identifiant de terminal (T1a, T1b ; T2a ; T3a ; T4a ; T5a) du terminal utilisé par l'abonné (U1, U2, U3, U4, U5) ; et au moins un enregistreur de données d'accès aux services (3, 4, 5, 6, 7) qui doit contenir, en tant que condition pour qu'un abonné (U1) puisse avoir accès à un service correspondant (S1, S2), au moins une partie des données d'approvisionnement (pdS1a, pdS1b ; pdS2a, pdS2b) correspondant auxdits service et abonné ; **caractérisé en ce que** le procédé comprend les étapes consistant à :
détecter, à partir de l'identifiant (T1a, T1b) du terminal, un changement de terminal par un abonné (U1) d'un précédent terminal à un nouveau terminal qui, à son tour, comprend l'obtention d'un actuel identifiant de terminal correspondant au terminal actuellement utilisé par un abonné, en analysant la paire MSISDN-IMEI dans les messages de signalisation et de facturation circulant à travers le réseau ;
détecter un nouveau type de terminal (TT4) correspondant au nouveau terminal (T1b) ;
obtenir, au moyen de l'accès à la première table (1) et en tant que réponse audit changement de terminal, les indications d'approvisionnement (pis1, piS2) correspondant au nouveau type de terminal (TT4) ; et
approvisionner l'abonné en tant que réponse audit changement de terminal et en fonction desdites indications d'approvisionnement (pis1, piS2) obtenues, incorporer de manière sélective à au moins un des enregistreurs de données d'accès aux services (3, 4, 5, 6) au moins une partie des données d'approvisionnement (pdS1a, pdS1b; pdS2a, pdS2b) correspondant auxdites indications d'approvisionnement (piS1, piS2) ;
**caractérisé en outre en ce que** les données historiques (13) relatives aux approvisionnements des abonnés sont enregistrées et les abonnés sont approvisionnés en fonction desdites données historiques (13), de telle sorte que lorsqu'un abonné change de terminaux, seules les données d'approvisionnement correspondant aux indications d'approvisionnement (piS2) qui n'avaient pas été précédemment appliquées à l'abonné sont introduites dans les enregistreurs de données d'accès aux services.

10. Procédé selon la revendication 9, **caractérisé en ce que** l'étape de détection d'un changement de terminal comprend les étapes consistant à :
comparer ledit actuel identifiant de terminal avec un précédent identifiant de terminal correspondant à un terminal utilisé lors d'une précédente occasion par le même abonné ; et
générer un événement indiquant un changement de terminal si l'actuel identifiant de terminal diffère du précédent identifiant de terminal.

11. Procédé selon l'une quelconque des revendications 9 et 10, **caractérisé en ce qu'**il comprend l'étape d'introduction d'au moins une partie des données d'approvisionnement (pdS2b) correspondant à un service dans au moins un des enregistreurs de données d'accès aux services (6) seulement une fois que l'abonné a tenté d'accéder audit service pour la première fois.

12. Procédé selon l'une quelconque des revendications 9 à 11, **caractérisé en ce que** les données d'approvisionnement historiques (13) comprennent une liste historique des terminaux utilisés par l'abonné, à partir de laquelle les indications d'approvisionnement appliquées à l'abonné peuvent être déduites.

13. Procédé selon l'une quelconque des revendications 9 à 12, **caractérisé en ce qu'**au moins l'un des enregistreurs de donnés d'accès aux services est un Enregistreur de location nominal (HLR).

14. Procédé selon l'une quelconque des revendications 9 à 13, **caractérisé en ce qu'**au moins l'un des enregistreurs de données d'accès aux services est un enregistreur contenu dans un terminal mobile de l'abonné et qui correspond à une partie de la configuration du terminal.

15. Procédé selon l'une quelconque des revendications 9 à 14, **caractérisé en ce que** l'identifiant de terminal est le numéro d'Identité Internationale d'Equipement Mobile (IMEI).

16. Procédé selon la revendication 15, **caractérisé en ce qu'**une partie du numéro d'Identité Internationale d'Equipement Mobile (IMEI) constitue un identifiant de type de terminal, et le nouveau type de terminal (TT4) correspondant au nouveau terminal (T1b) est détecté à partir de ladite partie du numéro d'Identité internationale d'équipement mobile (IMEI).
